# FASCICULE DE BREVET EUROPEEN

(11) **EP 1 920 184 B1**
(45) Date de publication et mention de la délivrance du brevet: **04.10.2017**
(21) Numéro de dépôt: 06847017.8
(22) Date de dépôt: 24.08.2006
(51) Int. Cl.: F16M 11/10

(54) **DISPOSITIF D'AFFICHAGE A ECRAN PLAT**
ANZEIGEVORRICHTUNG MIT FLACHBILDSCHIRM
FLAT SCREEN DISPLAY DEVICE

(30) Priorité: 01.09.2005 FR 0552651
(43) Date de publication de la demande: 14.05.2008
(73) Titulaire: Thomson Licensing DTV, 92130 Issy-les-Moulineaux (FR)
(72) Inventeur: POLICAR, Jean-Michel, F-75015 Paris (FR)
(74) Mandataire: Le Dantec, Claude
(86) Numéro de dépôt international: PCT/EP2006/065655
(87) Numéro de publication internationale: WO 2007/060039

(56) Documents cités:
- CA-C- 1 293 954
- DE-A1- 19 637 476
- US-A- 2 505 615
- US-A- 4 955 873
- US-A1- 2005 097 797
- US-A1- 2006 028 791

## Description

### 1. Domaine de l'invention.

La présente invention concerne le domaine des écrans et plus précisément le positionnement d'écrans plats, par exemple de type à cristaux liquides ou LCD (de l'anglais « Liquid Crystal Display »), sur un plan.

### 2. Etat de l'art.

Selon l'état de la technique, les écrans plats peuvent être fixés à un mur ou posés sur un plan. Un tel écran est, par exemple, décrit dans la demande de brevet US2004/0084588.

Le passage d'une position posée à une position accrochée ou adaptée au transport nécessite généralement une manipulation complexe et notamment l'installation et/ou la dépose d'un support fixé à l'arrière de l'écran. Cette manipulation présente l'inconvénient d'être relativement lourde à mettre en oeuvre et requiert un support compliqué et/ou encombrant.

Le document de brevet US2005/0097797 décrit des appareils avec écran, munis de poignées qui se plient ou se déplient autour d'un axe horizontal, parallèle au bas de l'appareil. En position posée, une poignée est positionnée vers l'avant et une autre vers l'arrière. Aussi, ces appareils présentent l'inconvénient d'être relativement encombrants que ce soit en position posée ou avec les poignées permettant de les porter.

### 3. Résumé de l'invention.

L'invention a pour but de pallier ces inconvénients de l'art antérieur.

Plus particulièrement, l'invention a pour objectif d'améliorer l'ergonomie d'un système d'affichage à écran plat pour qu'il puisse facilement être posé ou accroché à un mur tout en ayant un encombrement limité en position posée ou accrochée.

L'invention concerne un dispositif d'affichage comprenant un écran plat, un coffret, et au moins un bras mobile pouvant prendre des première et seconde positions:
- dans la première position, une extrémité du ou des bras mobiles est écartée du plan correspondant à la face avant de l'écran suivant une direction horizontale, une partie au moins du ou des bras étant adaptée à maintenir l'écran dans une position sensiblement verticale lorsque le dispositif repose sur un plan horizontal; et
- dans la seconde position, le ou les bras sont dans l'espace compris entre des plans parallèles à l'écran et tangents respectivement au devant et à l'arrière du coffret.

Selon une caractéristique particulière, le dispositif comprend deux bras mobiles.

Selon une caractéristique avantageuse, il comprend au moins une enceinte acoustique associée à chacun du ou des bras mobiles, chacune des enceintes étant fixée à une première extrémité du bras mobile qui lui est associé.

Préférentiellement, la hauteur de chacune des enceintes associées à un bras mobile est sensiblement égale à la hauteur de l'écran.

Avantageusement, la façade de chacune des enceintes est dans le plan de la façade de l'écran lorsque le bras qui lui est associé est dans la seconde position.

Selon une caractéristique préférée, chacun des bras mobiles et le coffret comprennent des moyens de rotation de chacun des bras mobiles par rapport à l'écran.

Selon une caractéristique avantageuse, les moyens de rotation comprennent un support et une rotule mobile insérée dans le support, la rotule étant mobile en rotation par rapport au support.

Préférentiellement, les moyens de rotation comprennent des moyens de guidage de chacun des bras mobiles.

Selon une autre caractéristique avantageuse, les moyens de rotation comprennent un support et un axe de rotation inséré dans le support, l'axe de rotation étant mobile en rotation par rapport au support.

Lorsque le dispositif comprend deux bras, les moyens de rotation comprennent avantageusement des moyens de synchronisation de la rotation de sorte que les deux bras mobiles bougent de manière synchrone.

Ces moyens de synchronisation comprennent, par exemple, au moins une roue en partie dentée.

Préférentiellement, chacun des bras mobiles et le coffret comprennent des moyens de limitation de la course des bras mobiles qui comprennent, par exemple, une butée.

Avantageusement, chacun des bras mobiles ou le coffret comprennent des moyens de blocage des bras mobiles dans la première et/ou la seconde position.

Selon une caractéristique particulière, chacun des bras mobiles comprend une plaque reliant les deux extrémités du bras, et lorsque les bras mobiles sont dans la première position, la plaque repose sur le plan horizontal.

Avantageusement, la façade de l'écran est penchée vers l'arrière lorsque les bras sont dans la première position, l'angle formé par la face inférieure des bras reposant sur le sol et la façade étant strictement inférieur à 90°.

Selon une caractéristique préférée, chacun des bras mobiles est relié à la partie inférieure de l'écran.

Selon une caractéristique particulière, le dispositif appartient au groupe comprenant les moniteurs informatiques et les téléviseurs.

L'invention concerne également le support correspondant.

### 4. Liste des figures.

L'invention sera mieux comprise, et d'autres particularités et avantages apparaîtront à la lecture de la description qui va suivre, la description faisant référence aux dessins annexés parmi lesquels :
- les figures 1 à 3 illustrent un dispositif d'affichage selon un mode particulier de réalisation de l'invention suivant des vues respectivement de face, de coté et de dessus, le dispositif d'affichage étant dans une position plate ;
- les figures 4 à 6 représentent le dispositif d'affichage des figures 1 à 3, suivant des vues respectivement de face, de coté et de dessus, le dispositif d'affichage étant posé sur un plan;
- la figure 7 décrit un support du dispositif d'affichage des figures 1 à 6;
- les figures 8 et 9 présentent un dispositif d'affichage selon une variante de réalisation de l'invention ; et
- les figures 10 à 13 illustrent d'autres variantes du dispositif d'affichage selon l'invention.

### 5. Description détaillée de l'invention.

Le principe général de l'invention repose donc sur un dispositif d'affichage à écran plat, comprenant au moins deux bras mobiles en position repliées lors du transport du dispositif d'affichage ou lorsqu'il est suspendu sur un mur, et en position dépliée lorsque le dispositif d'affichage repose sur un plan (par exemple, une table ou un meuble).

Ainsi, lorsque le dispositif passe d'une position de transport ou accrochée à une pose sur un plan horizontal, l'utilisateur peut facilement déplier le ou les bras mobiles pour assurer la stabilité de l'écran. A l'inverse, lorsque le système passe d'une pose sur un plan horizontal à une position accrochée ou de transport, l'utilisateur peut facilement replier le ou les bras, le dispositif étant peu encombrant (pour le transport) dans cette configuration et facile à accrocher par ailleurs. Cette architecture permet ainsi d'offrir à l'utilisateur la flexibilité dans le choix de son installation.

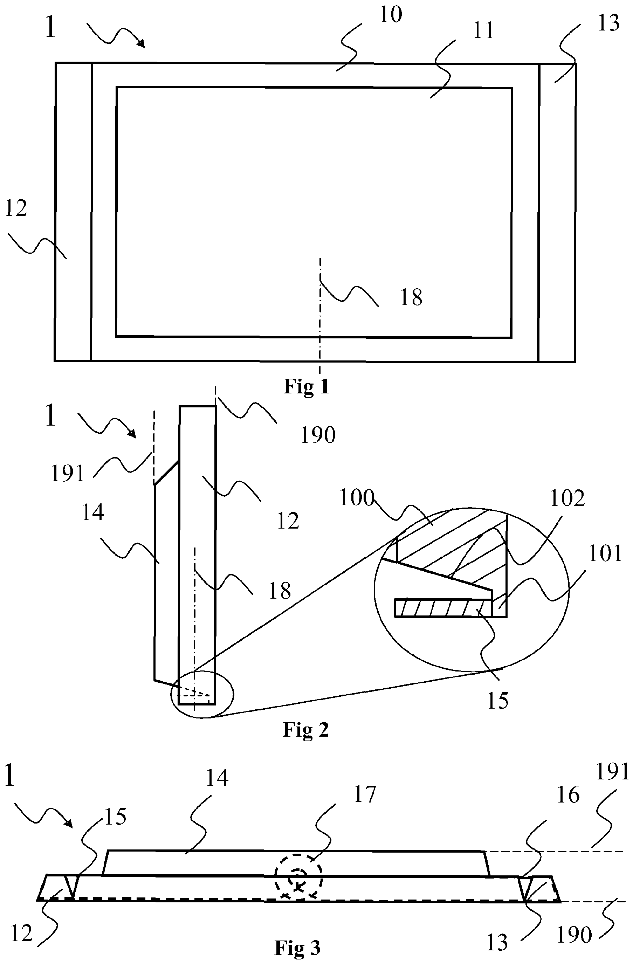

La **figure 1** illustre schématiquement une vue de face d'un dispositif d'affichage 1 dans une position plane ou repliée selon un mode de réalisation préféré de l'invention, cette position permettant un transport facile (l'encombrement du dispositif étant relativement faible) et/ou une accroche aisée sur un mur vertical. Le dispositif d'affichage est, par exemple, un téléviseur ou un moniteur informatique.

Le dispositif d'affichage 1 comprend:
- un coffret 10 entourant un écran plat 11 en façade;
- deux enceintes acoustiques 12 et 13, latérales.

Dans la position repliée, les enceintes acoustiques 12 et 13 qui ont une hauteur égale à la hauteur du coffret 10 sont adjacentes au coffret 10. Ainsi, l'encombrement du dispositif est relativement réduit. Selon une variante de réalisation, les enceintes sont moins hautes que le coffret 10, leur hauteur restant préférentiellement supérieure à la moitié de la hauteur du coffret 10.

Selon une variante de l'invention, les enceintes acoustiques ont une hauteur différente de la hauteur du coffret. En particulier, elles peuvent avoir une hauteur inférieure à la hauteur du coffret et, par exemple comprise entre 80 et 90mm.

L'écran plat 101 est, par exemple, un écran LCD ou un écran de type plasma. Le dispositif peut également être un rétroprojecteur de faible épaisseur.

Suivant une variante non illustrée, le coffret 10 comprend une ou plusieurs enceintes additionnelles (par exemple une ou plusieurs enceintes dédiées aux graves) sous l'écran.

Comme illustré sur la vue de coté en **figure 2****,** le coffret 10 comprend sur sa partie arrière un cache 14 permettant d'accueillir, notamment, les parties électroniques, l'alimentation et la connectique nécessaire (alimentation, câbles de connexion audio/vidéo) au fonctionnement de l'écran.

Le dispositif 1 comprend également les bras mobiles 15 et 16. Dans une bulle relative à la figure 2, on a représenté schématiquement une vue grossie d'une coupe de la partie inférieure du coffret 10. Cette partie comprend notamment une excroissance 101 en façade qui permet notamment de cacher des bras mobiles 15 et 16 et une face inférieure 102 préférentiellement contiguë et tangente à la face inférieure du cache 14 et qui permet au dispositif 1 de prendre appui sur le sol lorsque les bras 15 et 16 sont dépliés.

Dans la position repliée, les bras mobiles 15 et 16 sont compris entre deux plans parallèles à l'écran 11 et tangents respectivement au devant (190) (ou à la façade de l'écran 11) et à l'arrière (191) du coffret (ou du cache 14).

Selon une variante de l'invention, les bras 15 et 16 et/ou les enceintes acoustiques comprennent des moyens de maintien pour éviter un fléchissement des bras lorsque le dispositif est suspendu à un mur. Ces moyens de maintien sont des moyens mécaniques, par exemple, de type ergots situés près de l'extrémité mobile de chacun des bras et/ou en haut des enceintes acoustiques et qui viennent se fixer par exemple dans une patte rattachée au coffret 12 ou au cache 14). Il peut s'agir également de moyens magnétiques (par exemple aimants) situés près de l'extrémité mobile de chacun des bras et/ou en haut des enceintes acoustiques et/ou sur le cache ou le coffret. Ces moyens de maintien ou des moyens similaires peuvent également être utilisés pour maintenir les bras en position repliée lorsque le dispositif d'affichage est suspendu ou pendant le transport.

La **figure 3** présente une vue de dessus du dispositif 1. Chacun des bras comprend une plaque rigide qui relie un mécanisme de liaison 17 associé au coffret 10 à l'une des enceintes 12 ou 13.

Préférentiellement, le mécanisme de liaison 17 ainsi que les bras 15 et 16 en position repliée sont situées dans la partie inférieure du coffret 10 et ne sont pas visibles en façade.

Les enceintes 12 et 13 sont fixées de manière rigide aux bras respectivement 15 et 16. Comme indiqué sur la figure 3, la façade de chacune des enceintes 12 et 13 est dans le plan de la façade de l'écran 11 lorsque le bras qui lui est associé est dans position repliée.

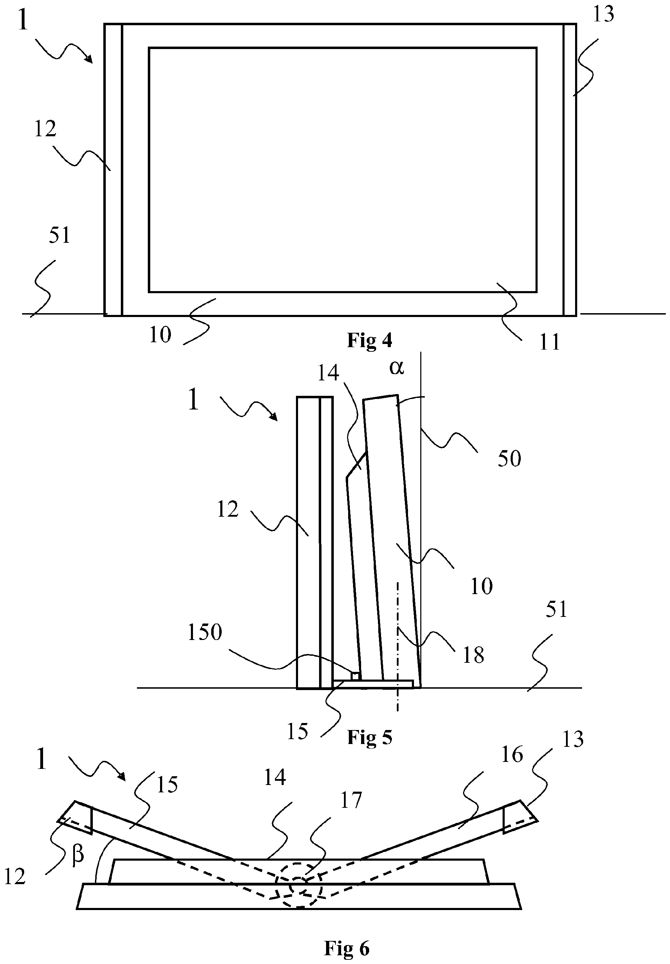

Selon les **figures 4 à 6** illustrant le dispositif 1 dans une position posée sur un plan horizontal, les bras mobiles 15 et 16 sont dépliés vers l'arrière d'un angle β par rapport à leur position repliée, les bras étant écartés de l'écran suivant une direction horizontale pour passer de la position dépliée à la position repliée ou vice-versa.

En mode d'utilisation du dispositif d'affichage 1 sur un plan sensiblement horizontal, la base du coffret 11 et les bras mobiles 15 et 16 reposent sur le sol. Les enceintes acoustiques étant situées vers l'arrière du coffret, elles permettent, grâce à leur poids de reculer le centre de gravité du dispositif 1 et donc d'améliorer la stabilité du dispositif reposant sur un plan horizontal.

Par ailleurs, en position repliée, les bras mobiles 15 et 16 sont positionnés derrière la façade du coffret 11 de sorte à ne pas être vus du spectateur, ce qui améliore l'ergonomie du dispositif 1 et permet de laisser le coffret reposé sur le plan lorsqu'on déplie les bras mobiles.

Préférentiellement, lorsque les bras mobiles 15 sont dépliés, la façade du coffret est légèrement inclinée d'un angle a par rapport à la verticale 50 afin d'améliorer la stabilité du dispositif 1 lorsqu'il est posé sur un plan horizontal 51. Cette position sensiblement verticale correspond par ailleurs à une position de confort permettant une bonne visualisation d'un spectateur situé en face de l'écran.

Préférentiellement, les bras mobiles 15 et 16 comprennent les câbles de liaisons qui transportent les signaux acoustiques et éventuellement une alimentation électrique du coffret 10 à chacune des enceintes respectivement 12 et 13. Avantageusement, ces câbles sont insérés dans les bras mobiles 15 et 16 pour des raisons ergonomiques et/ou de facilité de mise en oeuvre.

Avantageusement, un des bras mobiles ou les deux comprennent une ergot 150 qui permet de limiter la course des bras et/ou d'améliorer le maintien des bras en position dépliée, le cache 14 et/ou le coffret 10 venant en butée contre l'ergot 150. Cet ergot doit être suffisamment petit pour ne pas gêner le mouvement des bras mobiles 15 et 16 lors de leur dépliement et, éventuellement, permettre leur retour dans une position repliée.

D'une manière générale et préférentiellement, chacun des bras 15 et 16 et/ou le coffret comprennent des moyens de blocage des bras dans la position dépliée et/ou repliée. Ces moyens de blocage peuvent être mécaniques, par exemple, type clips, ergots ou fentes situés dans chacun des bras, les deux bras étant bloqués dans la position déplié lorsque leur extrémité mobile respective sont rapprochée, leurs moyens de blocage étant associés (dans ce cas, les bras sont solidarisés dans la position dépliée). Selon une variante, le coffret comprend également des moyens de blocage qui sont associés aux moyens de blocage des bras lorsque ces derniers sont dépliés. Il peut s'agir également de moyens magnétiques (par exemple aimants). Néanmoins, ces moyens sont facultatifs, le poids du coffret 10 et du cache 14 aidant au maintien des bras dans une position dépliée.

Ces moyens de blocage ou des moyens similaires peuvent également être utilisés pour maintenir les bras en position repliée lorsque le dispositif d'affichage est suspendu ou pendant le transport.

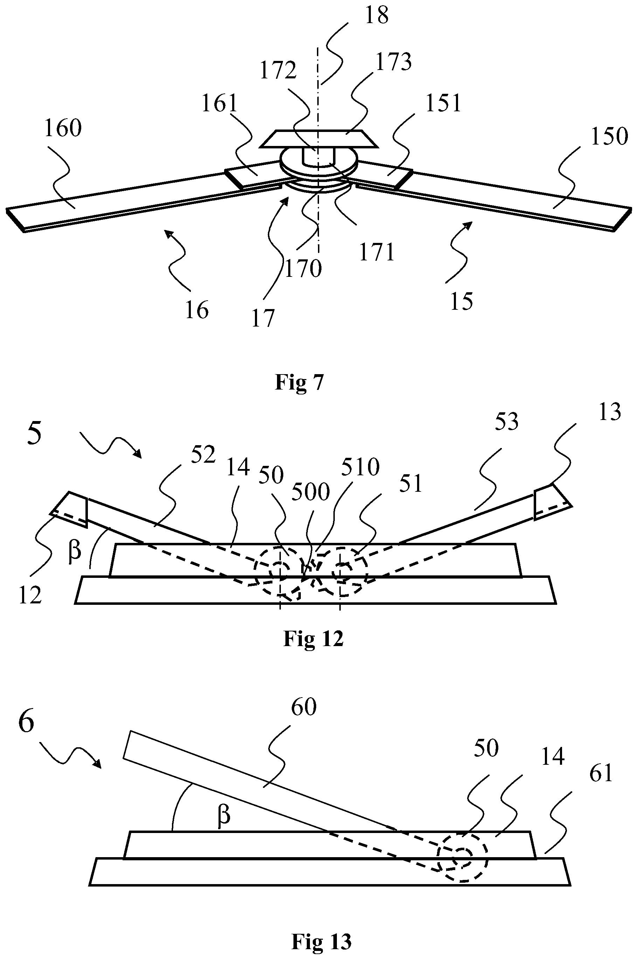

La **figure 7** représente une vue en perspective du support du coffret 10 et des enceintes 12 et 13, ce support comprenant les bras 15 et 16 ainsi que le mécanisme de liaison 17.

Le bras 15 (respectivement 16) comprend :
- une plaque 150 (respectivement 160) destinée à reposer sur le sol et dont l'extrémité libre comprend des moyens de fixation pour l'enceinte 12 (respectivement 13) par exemple de type vis ou colle ; et
- une plaque 151 (respectivement 161).

Le mécanisme de liaison 17 comprend :
- une plaque 170 destinée à reposer sur le sol de la même épaisseur que la plaque 150 ;
- une plaque 171 ;
- une partie cylindrique 172 dans laquelle s'insèrent successivement la plaque 170, les plaques 151 et 161, la plaque 171, les plaques 151 et 161 pouvant pivoter autour de la partie cylindrique 171 ;
- une platine de fixation 173 rectangulaire, solidaire de la partie cylindrique 171 et sur laquelle vient se fixer le coffret 10, par exemple, à l'aide de vis.

L'axe de rotation 18 des plaques 151 et 161 est perpendiculaire aux bras ; l'axe de rotation 18 est incliné par rapport au plan en façade de l'écran 11 lorsque les bras sont dépliés. Ainsi, lorsque les bras 15 et 16 sont repliés, leur base est adjacente au bas du coffret 10 et lorsqu'ils sont dépliés avec un angle β (suivant un plan horizontal) avec le plan de l'écran 11, l'écran est incliné vers l'arrière d'un angle α préférentiellement compris entre 2° et 6° et encore plus préférentiellement égal à 4°.

A titre illustratif, β vaut 30° et est préférentiellement compris entre 25° et 45°.

La profondeur du coffret 10 est, par exemple, égale à 40 mm pour un écran 11 de 26". La largeur de chacune des plaques 151 et 161 est inférieure à la profondeur du coffret et par exemple égale à 30 mm et préférentiellement comprise entre 25 et 40 cm ; leur épaisseur est, par exemple, égale à 5 mm et préférentiellement comprise entre 5 et 8 mm ; ces dimensions permettent d'assurer une bonne rigidité et stabilité. La longueur des plaques 151 et 161 dépend de la largeur du coffret 10 et la distance entre l'axe 18 et leur extrémité libre est préférentiellement inférieure à la moitié de la largeur du coffret 10 à laquelle s'ajoute la largueur de l'enceinte 12 ou 13, de sorte que l'enceinte 12 ou 13 soit adjacente au coffret 10 en position repliée.

Préférentiellement, l'épaisseur des plaques dépend des proportions de l'écran ; néanmoins, pour un écran de taille supérieure épaisseur des plaques est préférentiellement inférieure ou égale à 10mm.

Les plaques 151 et 161 sont, par exemple, en métal ou en plastique (éventuellement avec une âme plus rigide). Ainsi, le support est relativement économique et simple à fabriquer ce qui peut permettre une baisse des coûts de production significative vis-à-vis des supports de l'art antérieur.

Selon une variante de réalisation de l'invention, les plaques 151 et 161 et/ou le mécanisme de liaison 17 sont lestés, ce qui permet d'améliorer la stabilité du dispositif 1 lorsqu'il est posé sur un plan, les bras mobiles étant dépliés et/ou de réduire l'angle α d'inclinaison de l'écran 11.

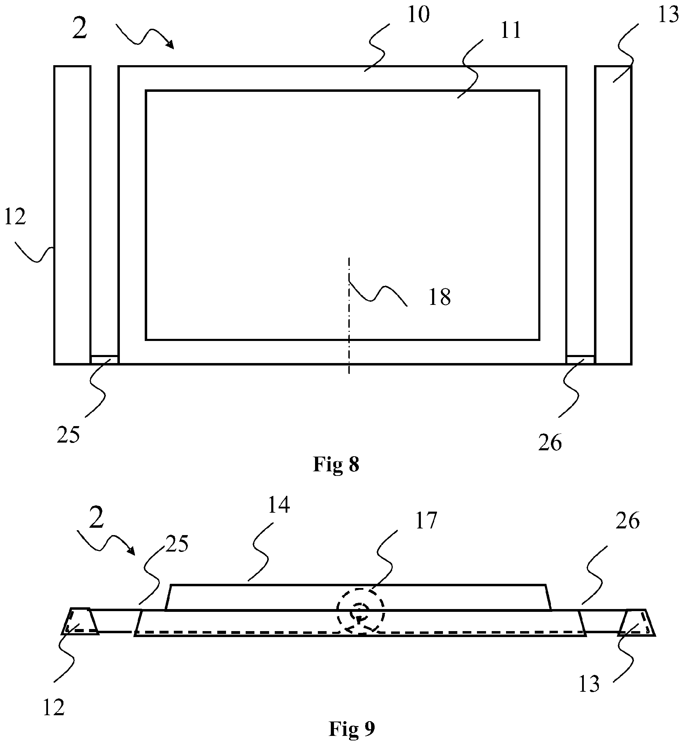

Les **figures 8 et 9** illustrent un dispositif d'affichage 2 selon une variante de l'invention, suivant respectivement une vue de face et une vue de dessus en position repliée.

Les dispositifs 1 et 2 différent essentiellement par leur bras mobiles, les autres éléments étant communs aux dispositifs 1 et 2, portent les mêmes références et ne seront pas décrits davantage.

Les bras mobiles 25 et 26 du dispositif 2 sont, en effet, plus longs que les bras mobiles 15 et 16 du dispositif 1. Ainsi, les enceintes 12 et 13 sont écartées du coffret 10 (par exemple de 8 cm et préférentiellement d'une distance comprise entre 5 et 15 cm, ce qui permet d'améliorer l'acoustique du dispositif 2 lorsque, notamment les bras mobiles sont dépliés.

Dans la position repliée, les bras mobiles 25 et 26 sont compris entre deux plans parallèles à l'écran et tangents respectivement au devant (ou à la façade de l'écran) et à l'arrière du coffret (ou du cache 14).

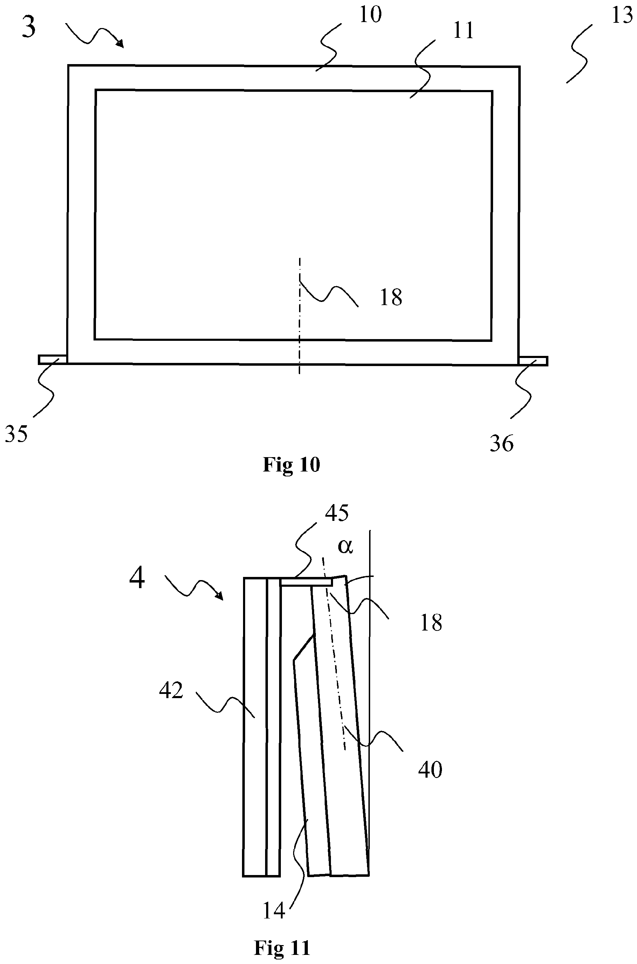

La **figure 10** divulgue un dispositif d'affichage 3 selon une variante de l'invention suivant une vue de face.

Contrairement aux dispositifs 1 et 2, le dispositif 3 ne possède pas d'enceinte mobile fixée à chacun des bras 35 et 36 (le dispositif 3 ne possède pas d'enceinte acoustique ou elles sont intégrées au coffret). Les autres éléments étant communs aux dispositifs 1, 2 et 3 portent les mêmes références et ne seront pas décrits davantage.

Afin de faciliter la représentation, les bras 35 et 36 sont de la même longueur que les bras 15 et 16 sur la figure 10. Néanmoins, préférentiellement, ils ne dépassent pas du coffret 10. La distance entre leur axe 18 et leur extrémité libre est donc inférieure à la demie-largeur du coffret 10.

La **figure 11** illustre un dispositif d'affichage 4 selon une variante de l'invention suivant une vue de coté.

Suivant cette variante, des bras mobiles 45 et 46 sont reliés à un coffret 40 par un mécanisme de liaison positionné sur la partie supérieure et centrale du coffret 40 (ce mécanisme étant par ailleurs similaire au mécanisme de liaison 17 décrit précédemment). Les bras mobiles 45 et 46 supportent respectivement des enceintes acoustiques 42 et 43 respectivement gauche et droite, la partie supérieure de chacune des enceintes acoustiques étant fixée à un bras mobile. Ainsi, lorsque les bras mobiles 45 et 46 sont dépliés, ils maintiennent l'écran dans une position sensiblement verticale (et de préférence légèrement inclinée vers l'arrière d'un angle α tel que précédemment décrit) lorsque le dispositif 4 repose sur un plan horizontal, la partie inférieure du coffret 40 et des enceintes 42 et 43 reposant sur le plan et assurant la stabilité de l'ensemble.

Dans la position repliée, les bras mobiles 45 et 46 sont compris entre deux plans parallèles à l'écran et tangents respectivement au devant (ou à la façade de l'écran) et à l'arrière du coffret (ou du cache 14).

Suivant une variante, les bras mobiles sont fixés sur la partie supérieure du coffret ou à une partie intermédiaire et ne sont pas munis d'enceintes. Ils ont alors une forme (par exemple coudée, ou droite et inclinée par rapport à un plan horizontal) adaptée de sorte que, le dispositif d'affichage reposant sur un plan horizontal, leur extrémité libre repose également sur ce plan (la base du coffret reposant également sur le plan).

La **figure 12** présente un dispositif d'affichage 5 selon une variante de l'invention suivant une vue de dessus.

Suivant cette variante, chacun des bras mobiles 52 et 53 est relié à la partie inférieure d'un coffret 50 par un mécanisme de liaison respectivement 50 et 51. Les deux mécanismes de liaison 50 et 51 (par exemple, similaires au mécanisme 17 avec des plaques de liaison similaires aux plaques 170 et 171 reliant les deux axes de rotation des bras mobiles 52 et 53) comprennent préférentiellement des moyens de synchronisation de type dents 500 et 510 s'imbriquant les unes les autres pour assurer un mouvement synchrone des deux bras (mécanisme similaire à deux roues crantées tournant simultanément en sens inverse). Ainsi, la manipulation par une seule personne, permettant le passage d'une position où les bras sont repliés à une position où les bras sont dépliés (ou vice-versa) est relativement aisée.

Avantageusement, les mécanismes de liaison comprennent des butées limitant la course des bras respectivement vers l'avant et vers l'arrière (ces butées sont par exemple des excroissances situées sur la tranche des mécanismes de liaison 50 et 51 et qui limitent la course des bras en venant s'appuyer sur le mécanisme 50 ou 51 opposé).

Préférentiellement, chacun des bras 50 et 51 et/ou le coffret comprennent des moyens de blocage des bras dans la position dépliée et/ou repliée. Ces moyens de blocage peuvent être mécaniques, par exemple, type ergots ou fentes situés dans chacun des bras, les deux bras étant bloqués dans la position déplié lorsque leur extrémité mobile respective sont rapprochée, leurs moyens de blocage étant associés (dans ce cas, les bras sont solidarisés dans la position dépliée). Selon une variante, le coffret comprend également des moyens de blocage qui sont associés aux moyens de blocage des bras lorsque ces derniers sont dépliés. Il peut s'agir également de moyens magnétiques (par exemple aimants). Ces moyens de blocage ou des moyens similaires peuvent également être utilisés pour maintenir les bras en position repliée lorsque le dispositif d'affichage est suspendu ou pendant le transport.

Dans la position repliée, les bras mobiles 52 et 53 sont compris entre deux plans parallèles à l'écran et tangents respectivement au devant (ou à la façade de l'écran) et à l'arrière du coffret (ou du cache 14).

Selon une variante, les mécanismes 50 et 51 ne sont pas liés par un mécanisme à roues crantées et sont séparés l'un de l'autre d'une distance comprise, par exemple, entre 0 et 10 cm. Dans ce cas, les mécanismes 50 et 51 sont similaires au mécanisme 17 avec une adaptation pour recevoir un seul bras mobile.

La **figure 13** présente un dispositif d'affichage 6 selon une variante de l'invention suivant une vue de dessus.

Suivant cette variante, le dispositif 6 ne comprend qu'un seul bras mobile 60 est relié à la partie inférieure d'un coffret 61 par un mécanisme de liaison 50 (similaire au mécanisme correspondant du dispositif 5). Préférentiellement, le bras 60 ne supporte pas d'enceinte acoustique. Il est également décentré par rapport au plan médian vertical du coffret 61.

Dans la position repliée, le bras mobile 60 est compris entre deux plans parallèles à l'écran et tangents respectivement au devant (ou à la façade de l'écran) et à l'arrière du coffret (ou du cache 14).

Bien entendu, l'invention ne se limite pas aux modes de réalisation décrits précédemment.

En particulier, l'homme du métier pourra mettre en oeuvre un dispositif d'affichage dont l'écran ne bascule pas vers l'arrière lorsque les bras mobiles sont dépliés mais au contraire reste parallèle à un plan donné lorsque les bras se déplient. Selon une variante non illustrée, l'écran reste vertical lorsque les bras sont dépliés et reposent sur un sol horizontal (en d'autres termes, l'écran est perpendiculaire au plan sur lequel reposent les bras). Dans ce cas, il suffit que les bras soient mobiles autour d'un axe parallèle à l'écran.

Par ailleurs, l'invention ne limite pas à la fixation des écrans de type LCD mais concerne tous les écrans plats, qui ont notamment une épaisseur comprise entre 30 et 50 mm.

Par ailleurs, l'invention ne limite pas à la fixation des dispositifs d'affichage avec écrans de type LCD mais concerne tous les dispositifs à écrans plats, qui ont notamment une profondeur hors tout inférieure ou égale 100 mm, la profondeur du coffret (hors cache) étant généralement inférieure ou égale à 50 mm. En particulier, l'invention concerne un système d'affichage à écran plat de type moniteur avec une profondeur relativement faible (par exemple égale à 12 mm voire à 8 mm). Ceci est particulièrement avantageux pour des systèmes de visualisation dédiés aux ordinateurs portables puisque le transport en est facilité (encombrement réduit).

L'invention concerne également les dispositifs d'affichage comprenant des bras mobiles associés au coffret avec un mécanisme de liaison qui ne limite pas à un axe et des pièces de maintien, les bras mobiles pivotant autour de cet axe. En particulier, l'invention concerne des dispositifs d'affichage où la liaison entre chacun des bras et le coffret se fait par l'intermédiaire d'une rotule et de son support, le mouvement du bras étant guidé par des moyens spécifiques rattachés au coffret et/ou au cache. Ainsi, le mouvement de bascule vers l'arrière de l'écran peut être relativement continu et doux lorsque les bras se déplient. Une rotule étant associée à chacun des bras et un support au coffret (ou selon une variante, un support étant associé à chacun des bras et au moins une rotule au coffret), chaque rotule insérée dans le support correspondant, chaque rotule insérée dans le support correspondant est mobile en rotation.

Selon une autre variante mettant en oeuvre au moins une rotule, le bas du coffret est profilé pour faire glisser le ou les bras vers l'arrière, l'écran restant perpendiculaire aux bras et pour faire basculer l'écran vers l'arrière d'un petit angle (pour améliorer la stabilité de l'ensemble et/ou le confort visuel du spectateur) lorsque le ou les bras en position dépliée dépassent une limite (dans le profil du coffret permet donc aussi de limiter la course des bras et de bloquer les bras dans la position dépliée).

L'invention concerne également des dispositifs d'affichage où des éléments reliés au dispositif sont positionnés à l'extrémité de l'un au moins des bras ; ces éléments sont, par exemple, un lecteur DVD avec un tiroir vertical, un boîtier de commande du dispositif (par exemple réglage de volume du son ou choix des chaînes s'il s'agit d'un téléviseur), des moyens pour transmettre et/ou recevoir des informations vers un équipement distants (par exemple émetteur pour un casque infra-rouge ou haute fréquence relié, par ailleurs, au dispositif d'affichage), composants associés au dispositif d'affichage (par exemple composants déportés vers l'extrémité des bras si l'écran est fin et/ou lorsqu'il n'y a pas de cache ou que sa profondeur est réduite).

Selon une autre variante, les bras mobiles équipés d'enceintes acoustiques sont télescopiques pour permettre une meilleure restitution du son vers un spectateur lorsque les bras sont dépliés.

Selon encore d'autres variantes, la section des bras est quelconque et, par exemple, cylindrique, ou semi-cylindrique. D'une manière générale, les bras comprennent un élément allongé à section quelconque qui repose sur le sol lorsque les bras sont en position dépliée.

## Revendications

1. Dispositif d'affichage (1 à 6) comprenant un écran plat (11) et un coffret (10), et, en outre, au moins un bras mobile (15, 16, 25, 26, 45, 52, 53, 60) pouvant prendre des première et seconde positions:
- dans la première position, une extrémité dudit ou desdits bras mobiles est écartée du plan correspondant à la face avant (190) de l'écran, suivant une direction horizontale lorsque le dispositif repose sur un plan horizontal (51), une partie au moins du ou des bras étant adaptée à maintenir l'écran dans une position sensiblement verticale; et
- dans la seconde position, ledit ou lesdits bras sont dans l'espace compris entre des plans parallèles audit écran et tangents respectivement au devant (190) et à l'arrière (191) dudit coffret ; **caractérisé en ce que**
ledit ou lesdits bras mobiles sont aptes à être déplié angulairement vers l'arrière dudit coffret pour passer de ladite seconde position à ladite première position suivant une direction horizontale lorsque le dispositif repose dans une position sensiblement verticale sur un plan horizontal (51).

2. Dispositif (1 à 5) selon la revendication 1 , **caractérisé en ce qu'**il comprend deux bras mobiles.

3. Dispositif selon l'une quelconque des revendication 1 et 2, **caractérisé en ce qu'**il comprend au moins une enceinte acoustique (12, 13, 42) associée à chacun du ou desdits bras mobiles, chacune desdites enceintes étant fixée à une première extrémité du bras mobile qui lui est associé.

4. Dispositif selon la revendication 3, **caractérisé en ce que** la hauteur de chacune desdites enceintes associées à un bras mobile est sensiblement égale à la hauteur dudit écran.

5. Dispositif selon l'une quelconque des revendications 3 et 4, **caractérisé en ce que** la façade de chacune desdites enceintes est dans le plan de la façade dudit écran lorsque le bras qui lui est associé est dans ladite seconde position.

6. Dispositif selon l'une quelconque des revendications 1 à 5, **caractérisé en ce que** chacun desdits bras mobiles et le coffret comprennent des moyens de rotation de chacun desdits bras mobiles par rapport audit écran.

7. Dispositif selon la revendication 6, **caractérisé en ce que** les moyens de rotation comprennent un support et une rotule mobile insérée dans le support, la rotule étant mobile en rotation par rapport au support.

8. Dispositif selon la revendication 7, caractérisé en que les moyens de rotation comprennent des moyens de guidage de chacun des bras mobiles.

9. Dispositif selon la revendication 6, **caractérisé en ce que** les moyens de rotation comprennent un support et un axe de rotation (18) inséré dans le support, l'axe de rotation étant mobile en rotation par rapport au support.

10. Dispositif selon l'une quelconque des revendications 6 à 9 et selon la revendication 2, **caractérisé en ce que** les moyens de rotation comprennent des moyens de synchronisation (500, 510) de la rotation de sorte que les deux bras mobiles bougent de manière synchrone.

11. Dispositif selon la revendication 10, **caractérisé en ce que** lesdites moyens de synchronisation comprennent au moins une roue au moins en partie dentée.

12. Dispositif selon l'une quelconque des revendications 1 à 11 , **caractérisé en ce que** chacun desdits bras mobiles et le coffret comprennent des moyens de limitation de la course desdits bras mobiles.

13. Dispositif selon la revendication 12, **caractérisé en ce que** lesdits moyens de limitation de la course desdits bras mobiles comprennent une butée.

14. Dispositif selon l'une quelconque des revendications 1 à 13, **caractérisé en ce que** chacun desdits bras mobiles ou le coffret comprennent des moyens de blocage desdits bras mobiles dans la première et/ou la seconde position.

15. Dispositif selon l'une quelconque des revendications 1 à 14, **caractérisé en ce que** chacun desdits bras mobiles comprend une plaque reliant les deux extrémités dudit bras, et **en ce que** lorsque lesdits bras mobiles sont dans ladite première position, ladite plaque repose sur ledit plan horizontal.

16. Dispositif selon l'une quelconque des revendications 1 à 15, **caractérisé en ce que** la façade de l'écran est penchée vers l'arrière lorsque lesdits bras sont dans ladite première position, l'angle formé par la face inférieure des bras reposant sur le sol et la façade étant strictement inférieur à 90°.

17. Dispositif selon l'une quelconque des revendications 1 à 16, **caractérisé en ce que** chacun desdits bras mobiles est relié à la partie inférieure de l'écran.

18. Dispositif selon l'une quelconque des revendications 1 à 17, caractérisé en qu'il appartient au groupe comprenant les moniteurs informatiques et les téléviseurs.

19. Dispositif selon l'une quelconque des revendications 1 à 18, caractérisé en que, dans la première position, une partie au moins du ou des bras est adaptée à maintenir l'écran dans une position inclinée d'un angle avec la verticale, compris entre 2° et 6°, lorsque le dispositif repose sur un plan horizontal.

20. Dispositif selon l'une quelconque des revendications 1 à 19, caractérisé en que, dans la première position, une extrémité dudit ou desdits bras mobiles est écartée du plan correspondant à la face avant de l'écran, les bras faisant un angle compris entre 25° et 45° suivant un plan horizontal, lorsque le dispositif repose sur un plan horizontal.

## Patentansprüche

1. Anzeigevorrichtung (1 bis 6), das einen Flachbildschirm (11) und ein Gehäuse (10) umfasst, und unter anderem mindestens einen beweglichen Arm (15, 16, 25, 26, 45, 52, 53, 60), der erste und zweite Positionen einnehmen kann:
- in der ersten Position ist ein Ende des oder der besagten beweglichen Arme von der Ebene, die der Vorderseite (190) des Bildschirms entspricht, in waagerechter Richtung abgespreizt, während die Vorrichtung auf einer waagerechten Ebene (51) aufliegt, wobei mindestens ein Teil des oder der Arme so geeignet ist, dass der Bildschirm in einer weitgehend senkrechten Position gehalten wird; und
- in der zweiten Position befinden sich der oder die besagten Arme in dem Raum zwischen Ebenen parallel zu dem besagten Bildschirm und tangential jeweils vor (190) und hinter (191) dem besagten Gehäuse;
**dadurch gekennzeichnet, dass**
der oder die besagten Arme geeignet sind, im Winkel hinter das besagte Gehäuse geklappt zu werden, um von der besagten zweiten Position waagerecht in die besagte erste Position zu wechseln, während die Vorrichtung in einer weitgehend senkrechten Position auf einer waagerechten Ebene (51) aufliegt.

2. Vorrichtung (1 bis 5) nach Anspruch 1, **dadurch gekennzeichnet, dass** sie zwei bewegliche Arme umfasst.

3. Vorrichtung nach einem der Ansprüche 1 und 2, **dadurch gekennzeichnet, dass** sie mindestens eine Lautsprecherbox (12, 13, 42) umfasst, die mit jedem des oder der beweglichen Arme verbunden ist, wobei jede der besagten Boxen an einem ersten Ende des beweglichen Arms befestigt ist, der mit ihr verbunden ist.

4. Vorrichtung nach Anspruch 3, **dadurch gekennzeichnet, dass** die Höhe jeder der besagten mit einem beweglichen Arm verbundenen Boxen sich weitgehend auf der gleichen Höhe des besagten Bildschirms befindet.

5. Vorrichtung nach einem der Ansprüche 3 und 4, **dadurch gekennzeichnet, dass** die Stirnseite von jeder der Boxen sich in der Stirnseitenebene des besagten Bildschirms befindet, während der mit ihr verbundene Arm sich in der besagten zweiten Position befindet.

6. Vorrichtung nach einem der Ansprüche 1 bis 5, **dadurch gekennzeichnet, dass** jeder besagten beweglichen Arme und das Gehäuse Mittel zum Drehen eines jeden der beweglichen Arme in Bezug auf den Bildschirm umfassen.

7. Vorrichtung nach Anspruch 6, **dadurch gekennzeichnet, dass** die Mittel zum Drehen einen Halter und einen in den Halter eingesetzten beweglichen Kugelkopf umfassen, wobei der Kugelkopf in Bezug auf den Halter drehbar ist.

8. Vorrichtung nach Anspruch 7, **dadurch gekennzeichnet, dass** die Mittel zum Drehen Mittel zum Führen jedes der beweglichen Arme umfassen.

9. Vorrichtung nach Anspruch 6, **dadurch gekennzeichnet, dass** die Mittel zum Drehen einen Halter und eine in den Halter eingesetzte Drehachse (18) umfassen, wobei die Drehachse in Bezug auf den Halter drehbar ist.

10. Vorrichtung nach einem der Ansprüche 6 bis 9 und nach Anspruch 2, **dadurch gekennzeichnet, dass** die Mittel zum Drehen Mittel zum Synchronisieren (500, 510) der Drehung umfassen, dergestalt, dass die beiden beweglichen Arme sich synchron bewegen.

11. Vorrichtung nach Anspruch 10, **dadurch gekennzeichnet, dass** die besagten Mittel zum Synchronisieren mindestens ein Rad umfassen, das mindestens zum Teil Zähne aufweist.

12. Vorrichtung nach einem der Ansprüche 1 bis 11,
**dadurch gekennzeichnet, dass** jeder der beweglichen Arme und das Gehäuse Mittel zum Begrenzen des Weges der besagten beweglichen Arme umfassen.

13. Vorrichtung nach Anspruch 12, **dadurch gekennzeichnet, dass** die besagten Mittel zum Begrenzen des Weges der beweglichen Arme einen Anschlag umfassen.

14. Vorrichtung nach einem der Ansprüche 1 bis 13,
**dadurch gekennzeichnet, dass** jeder der beweglichen Arme oder das Gehäuse Mittel zum Blockieren der besagten beweglichen Arme in der ersten und/oder der zweiten Position umfassen.

15. Vorrichtung nach einem der Ansprüche 1 bis 14,
**dadurch gekennzeichnet, dass** jeder der beweglichen Arme eine Platte umfasst, die die beiden Enden des besagten Armes verbindet.

16. Vorrichtung nach einem der Ansprüche 1 bis 15,
**dadurch gekennzeichnet, dass** die Stirnseite des Bildschirms nach hinten geneigt ist, während die besagten Arme sich in der ersten Position befinden, wobei der Winkel, der durch die Unterseite der auf dem Boden aufliegenden Arme und die Stirnseite gebildet wird, grundsätzlich weniger als 90° beträgt.

17. Vorrichtung nach einem der Ansprüche 1 bis 16,
**dadurch gekennzeichnet, dass** jeder der beweglichen Arme mit dem Unterteil des Bildschirms verbunden ist.

18. Vorrichtung nach einem der Ansprüche 1 bis 17,
**dadurch gekennzeichnet, dass** sie zu der Gruppe gehört, die Computerbildschirme und Fernseher umfasst.

19. Vorrichtung nach einem der Ansprüche 1 bis 18,
**dadurch gekennzeichnet, dass** in einer ersten Position mindestens ein Teil des oder der Arme geeignet ist, den Bildschirm in einer geneigten Position in einem Winkel zur Senkrechten zwischen 2° und 6° zu halten, während die Vorrichtung auf einer waagerechten Ebene aufliegt.

20. Vorrichtung nach einem der Ansprüche 1 bis 19,
**dadurch gekennzeichnet, dass** in einer ersten Position ein Ende des oder der besagten beweglichen Arme von der Ebene, die der Vorderseite des Bildschirms entspricht, abgespreizt ist, wobei die Arme einen Winkel zwischen 25° und 45° in waagerechter Ebene bilden, während die Vorrichtung auf einer waagerechten Ebene aufliegt.

## Claims

1. Display device (1 to 6) comprising a flat screen (11) and a casing (10), and further comprises at least one mobile arm (15, 16, 25, 26, 26, 45, 52, 53, 60) being able to take first and second positions:
- in the first position, one extremity of said mobile arm or mobile arms is distant from the plane corresponding to the front face (190) of the screen, according to a horizontal direction when the device is resting on a horizontal plane (51), one part at least of the arm or arms being adapted to support the screen in a noticeably vertical position, and
- in the second position, said arm or arms are in the space between the planes parallel to said screen and tangent respectively to the front (190) and to the back (191) of said casing;
**characterized in that**
said mobile arm or arms are adapted to be unfolded angularly backward from said casing to move from said second position to said first position according to a horizontal direction when the device is resting in a noticeably vertical position on a horizontal plane (51).

2. Device (1 to 5) according to claim 1, **characterized in that** it comprises two mobile arms.

3. Device according to any one of claims 1 and 2, **characterized in that** it comprises at least one loudspeaker (12, 13, 42) associated with each of said mobile arm or arms, each of said speakers being fixed to a first extremity of the mobile arm that is associated with it.

4. Device according to claim 3, **characterized in that** the height of each of said loudspeakers associated with a mobile arm is noticeably equal to the height of said screen.

5. Device according to any one of claims 3 and 4, **characterized in that** the façade of each one of said loudspeakers is in the plane of the façade of said screen when the arm that is associated with it is in said second position.

6. Device according to any one of claims 1 to 5, **characterized in that** each of said mobile arms and the casing comprise rotation means of each of said mobile arms with respect to said screen.

7. Device according to claim 6, **characterized in that** the rotation means comprise a support and a mobile ball joint inserted into the support, the ball joint being mobile in rotation with respect to the support.

8. Device according to claim 7, **characterized in that** the rotation means comprise guiding means of each of the mobile arms.

9. Device according to claim 6, **characterized in that** the rotation means comprise a support and a rotation axis (18) inserted into the support, the rotation axis being mobile in rotation with respect to the support.

10. Device according to any one of claims 6 to 9 and according to claim 2, **characterized in that** the rotation means comprise synchronisation means (500, 510) of the rotation such that the two arms move in a synchronous manner.

11. Device according to claim 10, **characterized in that** said synchronisation means comprise, for example, at least one at least partly toothed wheel.

12. Device according to any one of claims 1 to 11, **characterized in that** each of said mobile arms and the casing comprise limitation means of the travel of said mobile arms.

13. Device according to claim 12, **characterized in that** said limitation means of the travel of said mobile arms comprise a stop.

14. Device according to any one of claims 1 to 13, **characterized in that** each of said mobile arms or the casing comprise blocking means of said mobile arms in the first and/or the second position.

15. Device according to any one of claims 1 to 14, **characterized in that** each of said mobile arms comprises a plate linking the two extremities of said arm, and **in that** when said mobile arms are in said first position, said plate rests on said horizontal plane.

16. Device according to any one of claims 1 to 15, **characterized in that** the façade of the screen is tilted backward when said arms are in said first position, the angle formed by the lower face of the arms resting on the ground and the facade being strictly less than 90°.

17. Device according to any one of claims 1 to 16, **characterized in that** each of said mobile arms is linked to the lower part of the screen.

18. Device according to any one of claims 1 to 17, **characterized in that** it belongs to the group comprising computer monitors and television sets.

19. Device according to any one of claims 1 to 18, **characterized in that**, in the first position, one part at least of the arm or arms is suitable to support the screen in a tilted position of an angle to the vertical, between 2° and 6°, when the device is resting on a horizontal plane.

20. Device according to any one of claims 1 to 19, **characterized in that**, in the first position, one extremity of said mobile arm or mobile arms is distant from the plane corresponding to the front face of the screen, the arms making an angle between 25° and 45° according to a horizontal plane, when the device is resting on a horizontal plane.
